# EUROPEAN PATENT APPLICATION

(11) **EP 3 496 055 A1**
(43) Date of publication of application: **12.06.2019**
(21) Application number: 18210790.4
(22) Date of filing: 06.12.2018
(51) Int. Cl.: G07C 9/00

(54) **LOCK AUDITS ACCESS TO GUEST FOR SAFETY AND SECURITY**

(30) Priority: 11.12.2017 IN 201711044360
(71) Applicant: Carrier Corporation, Jupiter, FL 33478 (US)
(72) Inventor: MUKUNDALA, Sumanth Kumar, 500081 Telangana (IN)
(74) Representative: Schmitt-Nilson Schraud Waibel Wohlfrom Patentanwälte Partnerschaft mbB

(57) **Abstract**

A method of managing lock audits for an access control is provided. The method comprising: receiving one or more access requests to an access control; saving the one or more access requests; compiling the one or more access requests into a lock audit; filtering the lock audit to include only access requests received during a period of stay for a user device assigned to a room operably connected to the access control; and transmitting the lock audit to a mobile device.

## Description

### BACKGROUND

The subject matter disclosed herein generally relates to the field of access control systems, and more particularly to an apparatus and method for auditing access control systems.

Existing access controls may allow a person to unlock hotel rooms via a key card and/or a mobile device. Records depicting each attempt to unlock a hotel room lock may be kept in lock audit. Lock audits can see by front desk receptionist for online locks and hotel technician can see the lock audits by using a lock diagnostic device that can read the lock for online or offline locks. If the lock is offline the front desk would need to send hotel technicians to each lock using the diagnostic device to download the audits from the offline lock manually and then upload to front desk application.

Hotel guests typically do not have direct access to see the lock audits and if the guest would like to view the room lock audits, then the guest would need to contact the front desk. If the lock is offline then the front desk would have to send a hotel technician to download the audits from the lock.

### BRIEF SUMMARY

According to one embodiment, method of managing lock audits for an access control is provided. The method comprising: receiving one or more access requests to an access control; saving the one or more access requests; compiling the one or more access requests into a lock audit; filtering the lock audit to include only access requests received during a period of stay for a user device assigned to a room operably connected to the access control; and transmitting the lock audit to a mobile device.

In addition to one or more of the features described above, or as an alternative, further embodiments may include that prior to the transmitting the method further comprises: receiving a lock audit request from a mobile device.

In addition to one or more of the features described above, or as an alternative, further embodiments may include that the lock audit request is transmitted to the mobile device in response to the audit request.

In addition to one or more of the features described above, or as an alternative, further embodiments may include: receiving a restricted access request from a mobile device; receiving an access request from a user device not assigned to the access control; and transmitting a lock audit to the mobile device, when the access request from a user device not assigned to the access control is received.

In addition to one or more of the features described above, or as an alternative, further embodiments may include the lock audit request is transmitted to the mobile device through Bluetooth.

In addition to one or more of the features described above, or as an alternative, further embodiments may include that transmitting the lock audit request to a mobile device further comprises: transmitting the lock audit from the access control to a server; and transmitting the lock audit from the server to the mobile device.

In addition to one or more of the features described above, or as an alternative, further embodiments may include that the transmitting the lock audit from the access control to a server further comprises: transmitting the lock audit from the access control to a wireless access protocol device via wireless communication; and transmitting the lock audit from the wireless access protocol device to the server.

In addition to one or more of the features described above, or as an alternative, further embodiments may include that the transmitting the lock audit to a mobile device further comprises: determining a mobile device currently assigned to a room operably connected to the access control; and transmitting the lock audit to the mobile device currently assigned to the room operably connected to the access control.

In addition to one or more of the features described above, or as an alternative, further embodiments may include: transmitting the lock audit to a room management system located within a room operably connected to the access control.

According to another embodiment, an access control configured to control access to a room is provided. The access control comprising: a processor; and a memory comprising computer-executable instructions that, when executed by the processor, cause the processor to perform operations, the operations comprising: receiving one or more access requests; saving the one or more access requests in the memory; compiling the one or more access requests into a lock audit; filtering the lock audit to include only access requests received during a period of stay for a user device assigned to a room operably connected to the access control; and transmitting the lock audit to a mobile device.

In addition to one or more of the features described above, or as an alternative, further embodiments may include that prior to the transmitting, the operations comprise: receiving a lock audit request from a mobile device.

In addition to one or more of the features described above, or as an alternative, further embodiments may include that the lock audit request is transmitted to the mobile device in response to the audit request.

In addition to one or more of the features described above, or as an alternative, further embodiments may include that the operations further comprise: receiving a restricted access request from a mobile device; receiving an access request from a user device not assigned to the access control; and transmitting a lock audit to the mobile device, when the access request from a user device not assigned to the access control is received.

In addition to one or more of the features described above, or as an alternative, further embodiments may include that the lock audit request is transmitted to the mobile device through Bluetooth.

In addition to one or more of the features described above, or as an alternative, further embodiments may include that transmitting the lock audit request to a mobile device further comprises: transmitting the lock audit from the access control to a server, wherein the server transmits the lock audit to the mobile device.

In addition to one or more of the features described above, or as an alternative, further embodiments may include that the transmitting the lock audit from the access control to a server further comprises: transmitting the lock audit from the access control to a wireless access protocol device via wireless communication; wherein the wireless access protocol device transmits the lock audit to the server.

In addition to one or more of the features described above, or as an alternative, further embodiments may include that the transmitting the lock audit to a mobile device further comprises: determining a mobile device currently assigned to a room operably connected to the access control; and transmitting the lock audit to the mobile device currently assigned to the room operably connected to the access control.

In addition to one or more of the features described above, or as an alternative, further embodiments may include: transmitting the lock audit to a room management system located within a room operably connected to the access control.

Technical effects of embodiments of the present disclosure include tracking access requests to access control configured to open a door and provided an audit report of the access requests to a mobile device currently assigned to the door.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates a general schematic system diagram of an access control system, in accordance with an embodiment of the disclosure;
FIG. 2 illustrates a block diagram of an access control, mobile device and server of the access control system of FIG. 1, in accordance with an embodiment of the disclosure; and
FIG. 3 is a flow diagram illustrating a method managing lock audits for an access control, according to an embodiment of the present disclosure.

### DETAILED DESCRIPTION

A detailed description of one or more embodiments of the disclosed apparatus and method are presented herein by way of exemplification and not limitation with reference to the Figures.

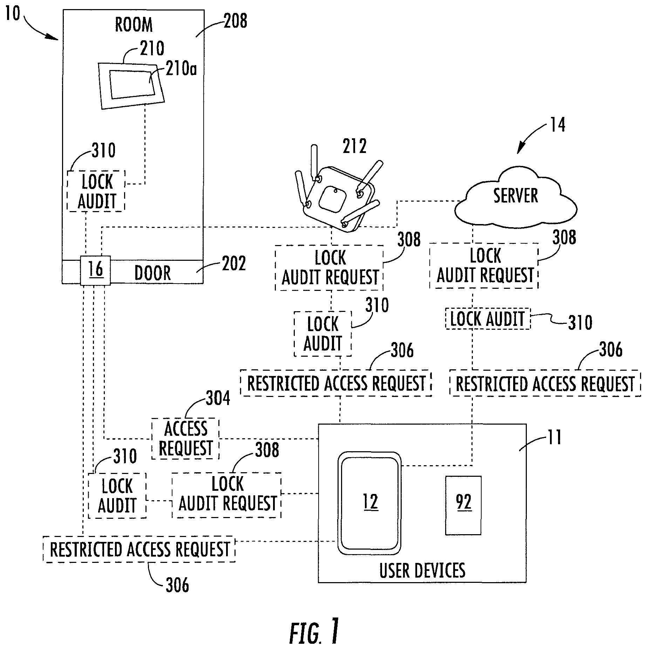

FIG. 1 schematically illustrates an access control system 10. The system 10 generally includes a user device 11, a server 14, a wireless access protocol device 212, a room management system 210, and an access control 16. It should be appreciated that while one access control 16 is illustrated, the access control system 10 may include any number of access controls 16. It should be appreciated that, although particular systems are separately defined in the schematic block diagrams, each or any of the systems may be otherwise combined or separated via hardware and/or software. In another embodiment, the access controls 16 may control access through a door 202 to a room 208. It should be appreciated that while one door 202 and room 208 are illustrated, the access control system 10 may include any number of doors 202 and rooms 208. Further, there may be multiple doors 202 and access controls 16 for each room 208. A room management system 210 may be located in each room 208. The room management system 210 is configured to control operations of a room 208 including but not limited temperature and lighting.

For a selected period of time (e.g. period of stay for a person at a hotel) the user device 11 belonging to a person may be granted access to one or more access controls 16 (e.g. the door lock on a hotel room assigned to the person). When a person checks in to the hotel room their user device 11 will be granted access to a room 208. There may be one or more user devices 11 assigned to a room 208 (e.g. a husband and a wife), thus embodiments disclosed herein may apply to multiple user devices 11 per room 208. For example, lock audits 310, discussed further below, may be sent to multiple user devices 12. A person may utilize their user device 11 to unlock and/or lock the access control 16 operably connected to their assigned room 208 through an access request 304. The user device may store credentials to unlock and/or lock the access control 16. Some credentials may be used for multiple access controls 16 if there are multiple access controls 16 for a single assigned room 208 or the person is assigned access to multiple rooms 208. For example, an access control 16 operably connected to a person's hotel room and an access control 16 operably connected to a hotel pool may respond to the same credential. Other credentials may be specific to a single access control 16.

The user device 11 may be a physical key card 92 and/or a mobile device 12. The user device 11 may transmit an access request 304 to the access control 16 by short-range radio transmission when the user device 11 is placed proximate the access control 16 or by the user device being inserted into the access control 16 for the access control to read the user device (e.g. a magnetic strip on an encoded card 92). The physical key card 92 is capable of being encoded with card data, such as, for example, a magnetic strip or RFID chip. The data may include credentials to grant access to a specific access control 16. For example, for a period of stay for the user device 11 may be granted access to a specific access control 16. The mobile device 12 is a wireless capable handheld device such as a smartphone that is operable to communicate with the server 14 and the access controls 16. The server 14 may provide credentials and other data to the access control 16, such as firmware or software updates to be communicated to one or more of the access controls 16. Although the server 14 is depicted herein as a single device, it should be appreciated that the server 14 may alternatively be embodied as a multiplicity of systems, from which the mobile device 12 receives credentials and other data.

Each access control 16 may be a wireless-capable, restricted-access, or restricted-use device such as wireless locks, access control readers for building entry, and other restricted-use machines. The user device 11 submits credentials to the access controls 16, thereby selectively permitting a user to access or activate functions of the access controls 16. A user may, for example, submit a credential to an electromechanical lock to unlock it, and thereby gain access to a room 208.

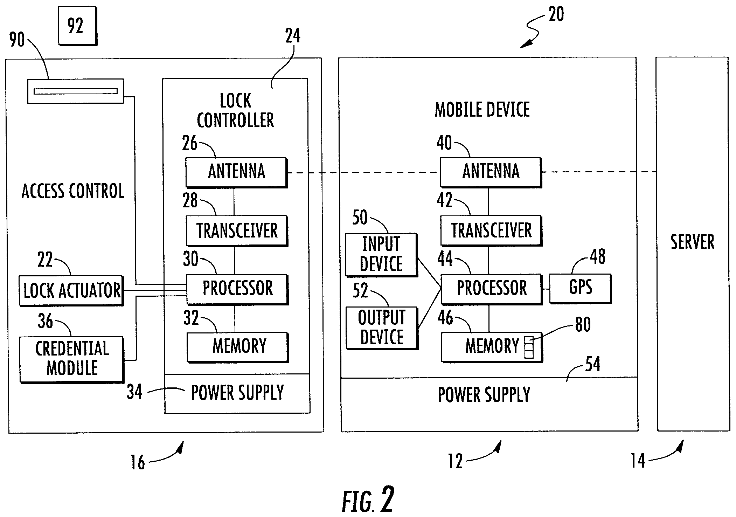

The access control 16 is configured to receive the access requests 304, save each access request 304, compile the access requests 304 into a lock audit 310, and then transmit the lock audit 310 to a mobile device 12 currently assigned to the room 208 operably connected to the access control 16. When the lock audit 310 is received on the mobile device 12, a person will then be able to view the lock audit 310 on the mobile device 12 through a mobile device application 80 (see FIG. 2). The lock audit 310 may contain access requests 304 from multiple different user devices 11 from various different people such as, for example, cleaning crews, hotel management, and technicians. The access control 16 may be configured to filter the lock audit 310 to include only access requests 304 received during a period of stay. Thus, a person will not be able to view access requests 304 that are received by the access control 16 operably connected to their assigned room 208 before or after the period of stay. If the mobile device 12 retrieves the lock audits 310 directly (e.g. by directBTLE communication or via the wireless access protocol device 212 to the access control 16) from the access control 16 then the access control 16 may be filtering the lock audit 310. If the mobile device 12 retrieves the lock audits 310 from the server 14 and downloads the lock audits 310 or has them sent to the mobile device 12 in real time, then the server 14 may be filtering the lock audit 310. The lock audit 310 may be transmitted periodically at a selected interval or may be transmitted in response to a lock audit request 308 received from the mobile device 12. In a non-limiting example, an alert may be transmitted to the mobile device 12 of a guest assigned to a hotel room 208 each time an access request 304 is transmitted. The alert may include a full lock audit 310 or the alert may include a lock audit 310 having a limiting timeframe, such as, for example the lock audit 310 my include only information from the access request 304 that was just made. For instance, a hotel guest may receive an alert when housekeeping opens up their hotel room door and the alert will include a lock audit 310 indicating that housekeeping successfully opened their hotel room door at a specific time. The alert may be audible, vibratory, and/or visually and may be operate through the mobile device application 80. For example, a phone may vibrate and/or chime when the alert containing the lock audit 310 is received.

The mobile device 12 may also transmit a restricted access request 306 to the access control 16. The restricted access request 306 may command the access control 16 to transmit a lock audit 310 after the access control has received an access request 306 from a user device 11 not assigned (i.e. not granted access) to the access control 16. Alternatively the restricted access request 306 may command the access control 16 to transmit a lock audit 310 when the access control 16 is forced open, or when it is opened during a time period configurable by the guest when for example, or when it is opened by hotel staff, or when opened by certain user devices 11, or when special access cards 92 are used to access the room 208. Advantageously, the restricted access request 306 will allow a person to be notified if someone else is trying to enter their hotel room.

The communication capability between both the access control 16 and the mobile device 12 may dictate how the access request 304 is transmitted from the mobile device 12 and how the lock audit 310 is received. The access control 16 may be wirelessly connected to the wireless access protocol device 212 and communicate wirelessly to the mobile device 12. In a non-limiting embodiment, even if the access control 16 is wirelessly capable, communication between the mobile device 12 and the access control may occur through the server 14. For example, the access control 16 may communication wirelessly through the wireless access protocol device 212 to the server 14 and then the server 14 may relay the communication wirelessly to the mobile device 12. In a further example, the mobile device 12 may communicate wirelessly to the server 14 and the server 14 may communicate wirelessly through the wireless access protocol device 212 to the access control 16. The communication between the server 14 and the mobile device 12 may occur through the wireless access protocol device 212 or another wireless network such as, for example, a cellular network. The access control 16 may be hardwired to the server 14 and thus communication between the mobile device 12 and the access control 16 may occur through the server 14. If the access control 16 is not hardwire connected to the server 14 or wirelessly connected to the server 14, the communication may occur between the access control 16 and the mobile device 12 via short range wireless communication, such as for example Wi-Fi, Bluetooth, zigbee, infrared, or any other short-range wireless communication method known to one of skill in the art. In an embodiment, the short-range wireless communication is Bluetooth. The mobile device 12 may have to be within a selected range of the access control 16 in order to utilize short-range wireless communication.

The access control 16 may also be wired and/or wirelessly connect to the room management system 210. The access control 16 may be wirelessly connected to the room management system 210 through Wi-Fi, Bluetooth, zigbee, infrared or any other wireless connection known to one of skill in the art. The access control 16 may transmit the lock audit 310 to the room management system 210 and the lock audit 310 may be viewed on a display screen 210a of the room management system 210. In the event a person assigned to the room 208 does not have a mobile device 12, the person may view lock audits 310 through the room management system 210.

Referring now to FIG. 2 with continued reference to FIG. 1. FIG. 2 shows a block diagram of an example electronic lock system 20 includes the access control 16, the mobile device 12, and the server 14. The access control 16 generally includes a lock actuator 22, a lock controller 24, a lock antenna 26, a lock transceiver 28, a lock processor 30, a lock memory 32, a lock power supply 34, a lock card reader 90 and a credential module 36. The access control 16 may have essentially two readers, one reader 90 to read a physical key card 92 and the credential module 36 to communicate with the mobile device 12 via the lock processor 30 and the transceiver 28 and antenna 26. The access control 16 is responsive to credentials from the mobile device 12, and may, for example, be the lock of a turnstile or a door lock. Although the present disclosure focuses primarily on credentials for access control, it should be appreciated that other systems wherein credentials are transmitted from a mobile device to an access control so as to identify the user to an online system or validate user access rights or permissions in an offline system will benefit herefrom. Such systems include hotel door lock systems. Upon receiving and authenticating an appropriate credential from the mobile device 12 using the credential module 36, or after receiving card data from lock card reader 90, the lock controller 24 commands the lock actuator 22 to lock or unlock a mechanical or electronic lock. The lock controller 24 and the lock actuator 22 may be parts of a single electronic or electromechanical lock unit, or may be components sold or installed separately.

The lock transceiver 28 is capable of transmitting and receiving data to and from at least the mobile device 12. The lock transceiver 28 may, for instance, be a near field communication (NFC), Bluetooth, infrared, zigbee, or Wi-Fi transceiver, or another appropriate wireless transceiver. The lock antenna 26 is any antenna appropriate to the lock transceiver 28. The lock processor 30 and lock memory 32 are, respectively, data processing, and storage devices. The lock processor 30 may, for instance, be a microprocessor that can process instructions to validate credentials and determine the access rights contained in the credentials or to pass messages from a transceiver to a credential module 36 and to receive a response indication back from the credential module 36. The lock memory 32 may be RAM, EEPROM, or other storage medium where the lock processor 30 can read and write data including but not limited to lock configuration options and the lock audit 310. The lock audit 310 may be a unified audit trail that includes events initiated by accessing the lock via a mobile device 12 or key card 92. The lock power supply 34 is a power source such as line power connection, a power scavenging system, or a battery that powers the lock controller 24. In other embodiments, the lock power supply 34 may only power the lock controller 24, with the lock actuator 22 powered primarily or entirely by another source, such as user work (e.g. turning a bolt).

While FIG. 2 shows the lock antenna 26 and the transceiver 28 connected to the processor 30, this is not to limit other embodiments that may have additional antenna 26 and transceiver 28 connected to the credential module 36 directly. The credential module 36 may contain a transceiver 28 and antenna 26 as part of the credential module. Or the credential module 36 may have a transceiver 28 and antenna 26 separately from the processor 30 which also has a separate transceiver 28 and antenna 26 of the same type or different. In some embodiments, the processor 30 may route communication received via transceiver 28 to the credential module 36. In other embodiments the credential module may communicate directly to the mobile device 12 through the transceiver 28.

The mobile device 12 generally includes a key antenna 40, a key transceiver 42, a key processor 44, a key memory 46, a GPS receiver 48, an input device 50, an output device 52, and a key power supply 54. The key transceiver 42 is a transceiver of a type corresponding to the lock transceiver 28, and the key antenna 40 is a corresponding antenna. In some embodiments, the key transceiver 42 and the key antenna 40 may also be used to communicate with the server 14. In other embodiments, one or more separate transceivers and antennas may be included to communicate with server 14. The key memory 46 is of a type to store a plurality of credentials locally on the mobile device 12. The mobile device 12 may also include a mobile device application 80. Embodiments disclosed herein, may operate through the mobile device application 80 installed on the mobile device 12.

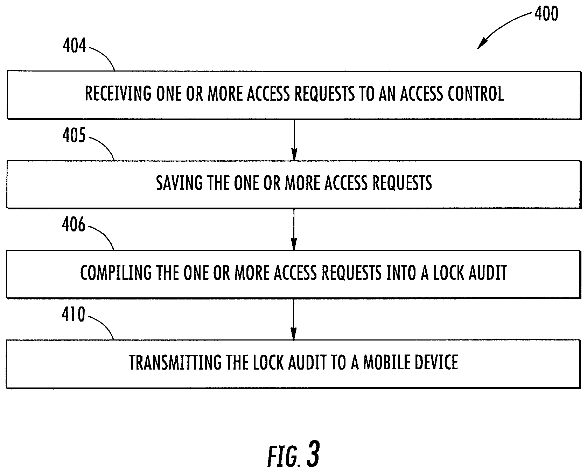

Referring now to FIG. 3 with continued reference to FIGs. 1-2. FIG. 3 shows a flow chart of method 400 of managing lock audits 310 for an access control 16, in accordance with an embodiment of the disclosure. At block 404, the access control 16 receives one or more access requests 304 to the access control 16. At block 405, the access control 16 saves the one or more access requests 304 to the memory 32. At block 406, the access control 16 compiles the one or more access requests 304 into a lock audit 310. Block 406 may also include that the access control 16 filters the lock audit 310 to include only access requests 304 received during a period of stay for a mobile device 12 assigned to a room 208 operably connected to the access control 16.

At block 410, the access control 16 transmits the lock audit 310 to a mobile device 12. Prior to block 410 the access control 16 may receive a lock audit request 306 from a mobile device 12. The lock audit 310 may be transmitted periodically, in response to a lock audit request 308, or in response to an access request received from a user device 11 not assigned to the access control (e.g. see restricted access request 306 discussed above). The lock audit request 306 is transmitted to the mobile device 12 through short-range wireless communication as described above. In an embodiment, the short-range wireless communication is Bluetooth. The access control 16 may also transmit the lock audit 310 to a server 14 and then to the mobile device 12. In this example, the server 14 may perform the filtering of the access requests 304 in the lock audit 310 that is compiled in step 406 that is then transmitted to the mobile device 12 in step 410. As described above, access control 16 may also transmit the lock audit 310 to a server 14 through a wireless access protocol device 212 via wireless communication (e.g. Wi-Fi). Also prior to block 410, the access control 16 may have to first determined which mobile device 12 is currently assigned to a room 208 operably connected to the access control 16 prior to transmitting the lock audit 310. The method 400 may further include: transmitting the lock audit 310 to a room management system located within a room 208 operably connected to the access control 16.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of managing lock audits for an access control, the method comprising:
receiving one or more access requests to an access control;
saving the one or more access requests;
compiling the one or more access requests into a lock audit;
filtering the lock audit to include only access requests received during a period of stay for a user device assigned to a room operably connected to the access control; and
transmitting the lock audit to a mobile device.

2. The method of claim 1, wherein prior to the transmitting the method further comprises:
receiving a lock audit request from a mobile device.

3. The method of claim 2, wherein:
the lock audit request is transmitted to the mobile device in response to the audit request.

4. The method of any of the preceding claims, further comprising:
receiving a restricted access request from a mobile device;
receiving an access request from a user device not assigned to the access control; and
transmitting a lock audit to the mobile device, when the access request from a user device not assigned to the access control is received.

5. The method of any of the preceding claims, wherein:
the lock audit request is transmitted to the mobile device through Bluetooth.

6. The method of any of the preceding claims,
wherein transmitting the lock audit request to a mobile device further comprises:
transmitting the lock audit from the access control to a server; and
transmitting the lock audit from the server to the mobile device;
and/or
wherein the transmitting the lock audit from the access control to a server further comprises:
transmitting the lock audit from the access control to a wireless access protocol device via wireless communication; and
transmitting the lock audit from the wireless access protocol device to the server.

7. The method of any of the preceding claims, wherein the transmitting the lock audit to a mobile device further comprises:
determining a mobile device currently assigned to a room operably connected to the access control; and
transmitting the lock audit to the mobile device currently assigned to the room operably connected to the access control.

8. The method of any of the preceding claims, further comprising:
transmitting the lock audit to a room management system located within a room operably connected to the access control.

9. An access control configured to control access to a room, the access control comprising:
a processor; and
a memory comprising computer-executable instructions that, when executed by the processor, cause the processor to perform operations, the operations comprising:
receiving one or more access requests;
saving the one or more access requests in the memory;
compiling the one or more access requests into a lock audit;
filtering the lock audit to include only access requests received during a period of stay for a user device assigned to a room operably connected to the access control; and
transmitting the lock audit to a mobile device.

10. The access control of claim 9,
wherein prior to the transmitting, the operations comprise:
receiving a lock audit request from a mobile device;
and/or
wherein the lock audit request is transmitted to the mobile device in response to the audit request.

11. The access control of claim 9 or 10, wherein the operations further comprise:
receiving a restricted access request from a mobile device;
receiving an access request from a user device not assigned to the access control; and
transmitting a lock audit to the mobile device, when the access request from a user device not assigned to the access control is received.

12. The access control of any of claims 9 to 11, wherein:
the lock audit request is transmitted to the mobile device through Bluetooth.

13. The access control of any of claims 9 to 12,
wherein transmitting the lock audit request to a mobile device further comprises:
transmitting the lock audit from the access control to a server, wherein the server transmits the lock audit to the mobile device;
and/or
wherein the transmitting the lock audit from the access control to a server further comprises:
transmitting the lock audit from the access control to a wireless access protocol device via wireless communication; wherein the wireless access protocol device transmits the lock audit to the server.

14. The access control of any of claims 9 to 13, wherein the transmitting the lock audit to a mobile device further comprises:
determining a mobile device currently assigned to a room operably connected to the access control; and
transmitting the lock audit to the mobile device currently assigned to the room operably connected to the access control.

15. The access control of any of claims 9 to 14, further comprising:
transmitting the lock audit to a room management system located within a room operably connected to the access control.
